# EUROPEAN PATENT SPECIFICATION

(11) **EP 3 632 578 B1**
(45) Date of publication and mention of the grant of the patent: **02.12.2026**
(21) Application number: 19197220.7
(22) Date of filing: 13.09.2019
(51) Int. Cl.: B05D 7/14, C09D 5/08, B64C 23/00, B32B 15/095, B32B 15/20, C23C 18/12, C09D 7/61, C09D 183/04, C08G 77/14, C08G 77/06, C08G 77/26, C08K 3/04, C08K 3/22, C08K 3/24, C08K 3/32, C08K 7/06

(54) **MULTI-LAYER COATING FOR A FLOW SURFACE OF AN AIRCRAFT COMPONENT**
MEHRSCHICHTIGE BESCHICHTUNG FÜR EINE STRÖMUNGSOBERFLÄCHE EINES FLUGZEUGBAUTEILS
REVÊTEMENT MULTICOUCHE POUR UNE SURFACE D'ÉCOULEMENT D'UN COMPOSANT D'AVION

(30) Priority: 14.09.2018 US 201816131367
(43) Date of publication of application: 08.04.2020
(73) Proprietor: Rohr, Inc., Chula Vista, CA 91910-2098 (US)
(72) Inventor: POTEET, Steven, Hamden, CT Connecticut 06518 (US); PUJAR, Vijay V., San Diego, CA California 92127 (US); KRUCKENBERG, Teresa, La Mesa, CA California 91941 (US)
(74) Representative: Dehns

(56) References cited:
- EP-A1- 1 820 578
- EP-A1- 2 145 917
- EP-A1- 2 752 251
- WO-A1-2012/064989
- JP-A- 2017 165 024
- JP-B2- 6 375 946
- US-A1- 2011 206 900
- US-A1- 2013 136 936
- US-A1- 2016 047 036

## Description

### BACKGROUND

### 1. Technical Field

This disclosure relates generally to coatings and, more particularly, to a multi-layer coating for an aircraft component.

### 2. Background Information

Various coatings are known in the art for use with aircraft components (EP2145917A1 discloses a coating of the prior art). Other fluoropolyether containing coating systems are disclosed in WO2012/064989 A1. While these known coatings have various advantages, there is still room in the art for improvement.

### SUMMARY OF THE DISCLOSURE

In an aspect, a component for an aircraft is provided according to claim 1.

The following features may be applied to any of the above aspects of the present disclosure.

The object surface of the metal object may be anodized and/or sealed.

The object may be configured as a nacelle noselip skin.

The object may be configured as a flight control skin.

The inhibitor may include ZnMoO4, Pr2O3, Ce-citrate, magnesium silicate, graphene nanoplatelets, alkali earth sulfate, zinc oxide and/or yttrium oxide.

The inhibitor may include (a) barium sulfate or calcium sulfate and (b) Pr(OH)3.

The barrier layer may be applied directly onto the object surface.

The laminar flow layer may be applied directly onto the barrier layer.

The multi-layer coating may also include a primer between the barrier layer and the laminar flow layer.

The primer may be configured from or otherwise include a functionalized alkoxysilane including a hydrolysable unit, (3-glycidoxypropy)trimethoxysilane and/or an aminoethylaminopropytrimethoxysilane.

The foregoing features and the operation of the invention will become more apparent in light of the following description and the accompanying drawings.

### BRIEF DESCRIPTION OF THE DRAWINGS

FIG. 1 is a perspective illustration of an aircraft, in accordance with various embodiments;
FIG. 2 is a sectional illustration of a portion of an exterior component with an aerodynamic exterior flow surface for an aircraft, in accordance with various embodiments; and
FIG. 3 is a sectional illustration of a portion of another exterior component with an aerodynamic exterior flow surface for an aircraft, in accordance with various embodiments.

### DETAILED DESCRIPTION

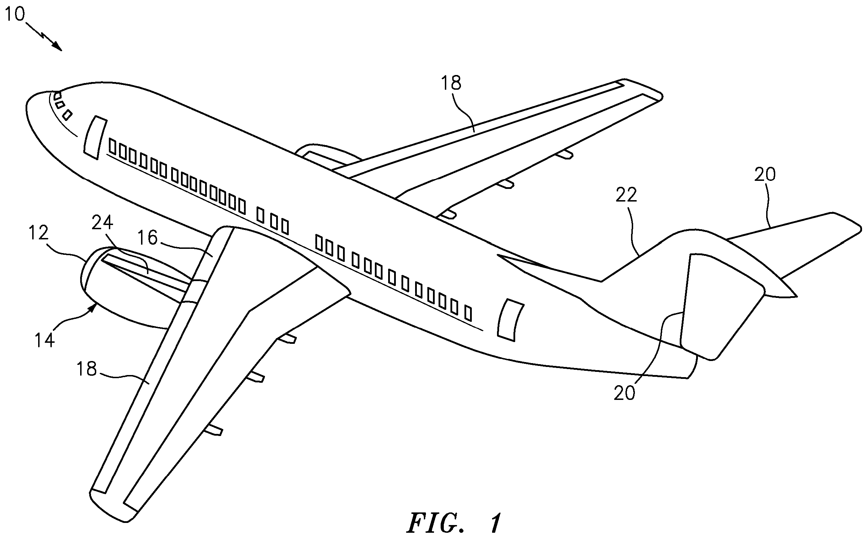

FIG. 1 is a perspective illustration of an aircraft 10 such as a passenger airliner. This aircraft 10 includes various exterior components with aerodynamic exterior flow surfaces. Examples of such exterior components include, but are not limited to, a noselip 12 of a nacelle 14 for a propulsion system, an aircraft flight control component as well as other aircraft components with leading edges. Examples of a flight control component include, but are not limited to, a wing leading edge flap 16 and a wing leading edge slat 18. Examples of other aircraft components with leading edges include, but are not limited to, a stabilizer wing 20, a tail wing 22 and an engine pylon 24. The present disclosure, of course, is not limited to the foregoing exemplary aircraft components. The present disclosure is also not limited to the foregoing exemplary aircraft configuration. For example, in other embodiments, the aircraft 10 may alternatively be configured as a business-type jet, a cargo plane, a propeller plane, a helicopter or any other type of aircraft.

An aircraft component with an aerodynamic exterior flow surface, such as the components described above, may be contaminated and/or damaged during aircraft operation with / by debris. Examples of debris include, but are not limited to, insects, dirt and ice. Accumulation of debris on the flow surface and/or damage (e.g., pitting, wear, etc.) to the flow surface caused by debris may negatively affect natural laminar flow over the flow surface of the component. A reduction in laminar flow may in turn reduce aircraft efficiency; e.g., reduce propulsion system fuel efficiency. Therefore, to prevent or reduce likelihood of debris related contamination and/or damage to the flow surface of the aircraft component, the aircraft component may include a multi-layer coating as described herein.

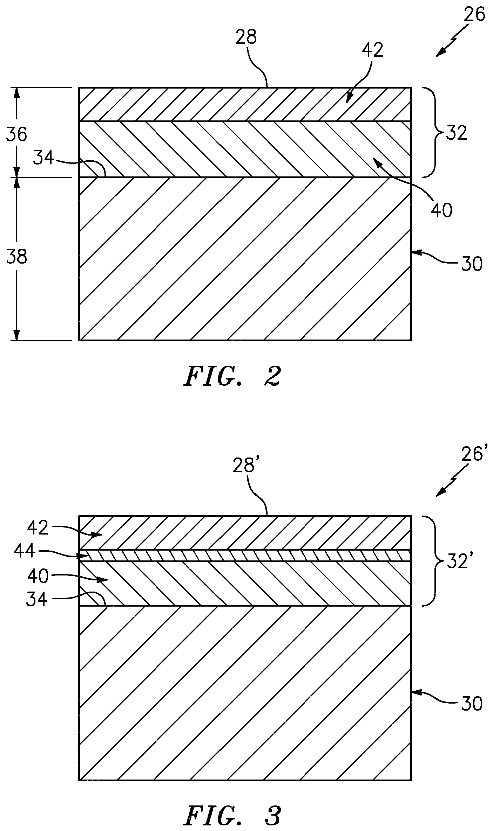

FIG. 2 is a sectional illustration of a portion of an exterior component 26 with an aerodynamic exterior flow surface 28 for an aircraft such as the aircraft 10. This component 26 may be configured as one of the exemplary exterior components described above, or any other component of an aircraft which forms an aerodynamic exterior flow surface of the aircraft. The component 26 of FIG. 2 includes an object 30 (e.g., a substrate) and a multi-layer coating 32.

The object 30 may be configured as a support and/or base structure of the component 26. More particularly, the object 30 may be configured to provide the component 26 with its structural integrity and characteristics (e.g., stiffness, etc.). The object 30 is also configured to provide the component 26 with its geometry and general size. For example, where the multi-layer coating 32 is applied substantially evenly over a surface 34 of the object 30 (object surface), the multi-layer coating 32 may not substantially (or at all) alter the underlying geometry of the object 30. Rather, the multi-layer coating 32 may merely add to the size of the object 30.

In some embodiments, the object 30 may be configured as or otherwise include an aerodynamic exterior flow skin. The object 30, for example, may be configured as or otherwise include a nacelle noselip skin (e.g., a skin of noselip 12 of FIG. 1) or a flight control skin (e.g., a skin of component 16, 18, 20, 22 or 24 of FIG. 1). The present disclosure, of course, is not limited to the foregoing exemplary embodiments.

The object 30 is formed from or otherwise include metal such as, but not limited to, aluminum (Al), titanium (Ti) or an alloy thereof.

The multi-layer coating 32 is applied (directly or indirectly) to and covers at least a portion (e.g., an entirety or a leading edge portion) of the object surface 34. The coating 32 may have a thickness 36 that is less than a thickness 38 of the object 30. For example, the object thickness 38 may be between about (e.g., +/- 2%) 13,000 to 250 times (e.g., between 500 and 800 times) greater than the coating thickness 36. However, in other embodiments, the object thickness 38 may be less than 250 times greater than the coating thickness 36, or greater than 13,000 times greater than the coating thickness 36. For example, the object thickness may be as small as about 0.020 inches (0.508 mm) and the thickness 36 may be as large as about 0.005 inches (0.127 mm) such that the object thickness 38 is about four times (4x) greater than the coating thickness 36. The present disclosure, of course, is not limited to the foregoing exemplary dimensions or dimensional relationships.

The multi-layer coating 32 of FIG. 2 at least includes (or may only include) a barrier layer 40 and a laminar flow layer 42. Each of these layers 40, 42 may provide and/or promote various characteristics such as, but not limited to, decreased insect adhesion, increased durability and corrosion protection as discussed below in further detail. In combination, the layers 40 and 42 may provide and/or promote various additional characteristics such as, but not limited to, transparency, relatively high temperature resistance and relatively high solvent resistance.

The barrier layer 40 is applied (directly or indirectly) to and covers at least a portion (e.g., an entirety or a leading edge portion) of the object surface 34. This barrier layer 40 may account for about (e.g., +/- 2%) 93 to 98 percent of the coating thickness 36. The present disclosure, of course, is not limited to the foregoing exemplary dimensions. For example, in other embodiments, the barrier layer 40 may account for less than 97 percent of the coating thickness 36, or more than 95 percent of the coating thickness 36.

The barrier layer 40 may be configured to provide passive and/or active corrosion protection for the underlying object material. According to the invention, for passive corrosion protection, the barrier layer 40 at least includes (or may only include) a fluoropolymer and may include a silicon rubber and/or a polyurethane. An example of a fluoropolymer containing material is, but is not limited to, the fluoropolymer containing material disclosed in U.S. Patent No. 9,567,468.

For active corrosion protection, the barrier layer 40 at least includes (or may only include) at least one of the above-described barrier layer materials in combination with one or more inhibitors. More particularly, the barrier layer material is doped with the one or more inhibitors. Examples of an inhibitor include, but are not limited to, ZnMoO4, Pr2O3, Ce-citrate, magnesium silicate, graphene nanoplatelets, alkali earth sulfate, zinc oxide and/or yttrium oxide. Where the inhibitor is an alkali earth sulfate such as, but not limited to, barium/calcium sulfate, Pr(OH)3 is included in the barrier layer material. Examples of other inhibitors which may also be included in the barrier layer material include those inhibitors disclosed in U.S. Publication No. 2017/0350020. The present disclosure, of course, is not limited to the exemplary fluoropolymer, silicon rubber, polyurethane or inhibitor materials described above. Furthermore, in some embodiments, the barrier layer material may also include one or more additives not described above.

The laminar flow layer 42 of FIG. 2 is applied directly to and covers at least a portion (e.g., an entirety or a leading edge portion) of the underlying barrier layer 40. This laminar flow layer 42 may account for about (e.g., +/- 2%) 7 to 2 percent of the coating thickness 36. The present disclosure, of course, is not limited to the foregoing exemplary dimensions. For example, in other embodiments, the laminar flow layer 42 may account for less than 5 percent of the coating thickness 36, or more than 3 percent of the coating thickness 36.

The laminar flow layer 42 may form at least a portion (e.g., an entirety or a leading edge portion) of the flow surface 28 of the component 26. Thus, the laminar flow layer 42 may be directly exposed to air flowing along the component 26 during aircraft operation. As a result, the laminar flow layer 42 may also be directly exposed to debris carried by the air. Therefore, the laminar flow layer 42 is configured to promote laminar flow of the air over the component 26. More particularly, the laminar flow layer 42 is configured to increase durability of the component 26 as well as reduce debris (e.g., insect, direct and/or ice) adhesion to the flow surface 28. According to the invention, the laminar flow layer 42 at least includes (or may only include) a sol-gel siloxane and may include a rare-earth oxide and a phosphate. The sol-gel siloxane containing material may also include a chlorosilane and/or a cross-linker. Such sol-gel siloxane containing material can provide nanostructuring, which can help to decrease surface energy; e.g., has relatively high hydrophobicity. Another example of a sol-gel siloxane containing material is disclosed in U.S. Publication No. 2005/0282953. Examples of a rare-earth oxide include, but are not limited to, CeO2 and LaPO4, where the Ce and La may be replaced with any other rare-earth element such as, but not limited to, Pr, Sm, Eu, Gd, Tb, Dy, Ho, Er, and Yb. Such rare earth oxides are durable, high temperature resistant ceramics. The present disclosure, of course, is not limited to the exemplary sol-gel siloxane, rare-earth oxide or phosphate materials described above. Furthermore, in some embodiments, the laminar flow layer material may also include one or more additives not described above.

FIG. 3 is a sectional illustration of a portion of another exterior component 26' with an aerodynamic exterior flow surface 28' for an aircraft such as the aircraft 10. Similar to the component 26 of FIG. 2, the component 26' of FIG. 3 may be configured as one of the exemplary exterior components described above, or any other component of an aircraft which forms an aerodynamic exterior flow surface of the aircraft. The component of FIG. 3 includes the object 30 and the layers 40 and 42 of the multi-layer coating 32 described above with reference to FIG. 2. However, in contrast to the component 26 of FIG. 2, a multi-layer coating 32' of FIG. 3 also includes a primer 44 disposed between the barrier layer 40 and the laminar flow layer 42. Thus, the laminar flow layer 42 is applied indirectly to the barrier layer 40 through the primer 44.

The primer 44 is applied (directly or indirectly) to and covers at least a portion (e.g., an entirety or a leading edge portion) of the underlying barrier layer 40. The primer 44 is configured to promote adhesion between the barrier layer 40 and the laminar flow layer 42, which layer 42 is applied (directly or indirectly) to and covers at least a portion (e.g., an entirety or a leading edge portion) of the underlying laminar flow layer 42.

The primer 44 may at least include (or may only include) a functionalized alkoxysilane that includes a hydrolysable ligand such as, but not limited to, a halide, an alkoxide, or an amine. The primer 44 may at least include (or may only include) (3-glycidoxypropy)trimethoxysilane and/or an aminoethylaminopropytrimethoxysilane (diaminofunctional silane). An example of a functionalized alkoxysilane is (3-aminopropyl)triethoxysilane. The silane may include 1 to 3 hydrolyzable units (alkoxy (e.g., ethoxy, methoxy, etc.) for bonding to a surface of the barrier layer 40 following hydrolysis and subsequent condensation. The terminal functional group may include amino, amide, carboxy, epoxide, etc. for bonding to the laminar flow layer 42. The halide may include Cl, Br or I for bonding to a surface of the barrier layer 40. In some embodiments, a mixture of hydrolysable units (e.g., mixture of alkoxy and halide) may also be considered. The present disclosure, of course, is not limited to the exemplary primer materials described above.

In some embodiments, the object 30 and its surface 34 may be conditioned prior to application of the multi-layer coating 32, 32'. This conditioning may promote enhanced adhesion between the object 30 and the barrier layer 40. The conditioning may also or alternatively provide enhanced corrosion protection of the object material. For example, where the object 30 is formed from metal (e.g., aluminum and aluminum alloy), the object surface 34 may be anodized and/or scaled.

While various embodiments of the present invention have been disclosed, it will be apparent to those of ordinary skill in the art that many more embodiments and implementations are possible within the scope of the invention as defined in the appended claims. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims.

## Claims

1. A component for an aircraft, comprising:
an object (30) including an object surface (34); and
a multi-layer coating (32) comprising:
a barrier layer (40) covering at least a portion of the object surface (34), the barrier layer (40) comprising a fluoropolyether;
a laminar flow layer (42) covering the barrier layer (40) and forming an exterior surface (28) of the component, the laminar flow layer (42) comprising a sol-gel siloxane;
wherein the object (30) is a metal object; **characterised in that**
the barrier layer (40) is doped with at least one inhibitor; and
the inhibitor comprises at least one of ZnMoO4, Pr2O3, Ce-citrate, magnesium silicate, graphene nanoplatelets, alkali earth sulfate, zinc oxide or yttrium oxide; or
the inhibitor comprises:
barium sulfate or calcium sulfate; and
Pr(OH)₃.

2. The component of claim 1, wherein the object surface (34) is at least one of anodized or sealed.

3. The component of claim 1 or 2, wherein the object (30) is configured as a nacelle noselip skin or a flight control surface.

4. The component of any preceding claim, wherein the barrier layer (40) comprises a silicon rubber.

5. The component of any preceding claim, wherein the barrier layer (40) comprises a polyurethane.

6. The component of any preceding claim, wherein the inhibitor comprises at least one of ZnMoO4, Pr2O3, Ce-citrate, magnesium silicate, graphene nanoplatelets, alkali earth sulfate, zinc oxide or yttrium oxide.

7. The component of any preceding claim, wherein the inhibitor comprises:
barium sulfate or calcium sulfate; and
Pr(OH)₃.

8. The component of any preceding claim, wherein the barrier layer (40) is applied directly onto the object surface (34).

9. The component of any preceding claim, wherein the laminar flow layer (42) is applied directly onto the barrier layer (40).

10. The component of any of claims 1-8, wherein the multi-layer coating (32) further comprises a primer (44) between the barrier layer (40) and the laminar flow layer (42).

11. The component of claim 10, wherein the primer (44) comprises one of a functionalized alkoxysilane including a hydrolysable unit, (3-glycidoxypropy)trimethoxysilane and an aminoethylaminopropytrimethoxysilane.

## Patentansprüche

1. Bauteil für ein Flugzeug, umfassend:
ein Objekt (30), das eine Objektoberfläche (34) beinhaltet; und
eine mehrschichtige Beschichtung (32), umfassend:
eine Barriereschicht (40), die mindestens einen Teil der Objektoberfläche (34) bedeckt, wobei die Barriereschicht (40) einen Fluorpolyether umfasst;
eine Laminarströmungsschicht (42), die die Barriereschicht (40) bedeckt und eine Außenfläche (28) des Bauteils ausbildet, wobei die Laminarströmungsschicht (42) ein Sol-Gel-Siloxan umfasst;
wobei es sich bei dem Objekt (30) um ein Metallobjekt handelt;
**dadurch gekennzeichnet, dass**
die Barriereschicht (40) mit mindestens einem Inhibitor dotiert ist; und
der Inhibitor mindestens eines von ZnMoO4, Pr2O3, Ce-Citrat, Magnesiumsilikat, Graphen-Nanoplättchen, Erdalkalisulfat, Zinkoxid oder Yttriumoxid umfasst; oder
der Inhibitor Folgendes umfasst:
Bariumsulfat oder Calciumsulfat; und
Pr(OH)₃.

2. Bauteil nach Anspruch 1, wobei die Objektoberfläche (34) mindestens eines von anodisiert oder versiegelt ist.

3. Bauteil nach Anspruch 1 oder 2, wobei das Objekt (30) als eine Gondel-Einlauflippenhaut oder als eine Flugsteuerfläche konfiguriert ist.

4. Bauteil nach einem der vorhergehenden Ansprüche, wobei die Barriereschicht (40) einen Silikonkautschuk umfasst.

5. Bauteil nach einem der vorhergehenden Ansprüche, wobei die Barriereschicht (40) ein Polyurethan umfasst.

6. Bauteil nach einem der vorhergehenden Ansprüche, wobei der Inhibitor mindestens eines von ZnMoO4, Pr2O3, Ce-Citrat, Magnesiumsilikat, Graphen-Nanoplättchen, Erdalkalisulfat, Zinkoxid oder Yttriumoxid umfasst.

7. Bauteil nach einem der vorhergehenden Ansprüche, wobei der Inhibitor Folgendes umfasst:
Bariumsulfat oder Calciumsulfat; und
Pr(OH)₃.

8. Bauteil nach einem der vorhergehenden Ansprüche, wobei die Barriereschicht (40) direkt auf die Objektoberfläche (34) aufgebracht ist.

9. Bauteil nach einem der vorhergehenden Ansprüche, wobei die Laminarströmungsschicht (42) direkt auf die Barriereschicht (40) aufgebracht ist.

10. Bauteil nach einem der Ansprüche 1 bis 8, wobei die mehrschichtige Beschichtung (32) ferner eine Grundierung (44) zwischen der Barriereschicht (40) und der Laminarströmungsschicht (42) umfasst.

11. Bauteil nach Anspruch 10, wobei die Grundierung (44) eines von einem funktionalisierten Alkoxysilan, das eine hydrolysierbare Einheit beinhaltet, (3-Glycidoxypropyl)trimethoxysilan oder einem Aminoethylaminopropyltrimethoxysilan umfasst.

## Revendications

1. Composant pour aéronef, comprenant :
un objet (30) comportant une surface d'objet (34) ; et
un revêtement multicouche (32) comprenant :
une couche barrière (40) recouvrant au moins une partie de la surface d'objet (34), la couche barrière (40) comprenant un fluoropolyéther ;
une couche d'écoulement laminaire (42) recouvrant la couche barrière (40) et formant une surface extérieure (28) du composant, la couche d'écoulement laminaire (42) comprenant un siloxane sol-gel ;
dans lequel l'objet (30) est un objet métallique ; **caractérisé en ce que**
la couche barrière (40) est dopée avec au moins un inhibiteur ; et
l'inhibiteur comprend au moins l'un parmi ZnMoO4, Pr2O3, le citrate de Ce, le silicate de magnésium, des nanoplaquettes de graphène, un sulfate alcalino-terreux, l'oxyde de zinc ou l'oxyde d'yttrium ; ou
l'inhibiteur comprend :
du sulfate de baryum ou du sulfate de calcium ; et
Pr(OH)₃.

2. Composant selon la revendication 1, dans lequel la surface d'objet (34) est au moins anodisée ou colmatée.

3. Composant selon la revendication 1 ou 2, dans lequel l'objet (30) est configuré sous la forme d'un revêtement de lèvre d'entrée d'air de nacelle ou d'une surface de commande de vol.

4. Composant selon une quelconque revendication précédente, dans lequel la couche barrière (40) comprend un caoutchouc de silicone.

5. Composant selon une quelconque revendication précédente, dans lequel la couche barrière (40) comprend un polyuréthane.

6. Composant selon une quelconque revendication précédente, dans lequel l'inhibiteur comprend au moins l'un parmi ZnMoO₄, Pr₂O₃, le citrate de Ce, le silicate de magnésium, des nanoplaquettes de graphène, un sulfate alcalino-terreux, l'oxyde de zinc ou l'oxyde d'yttrium.

7. Composant selon une quelconque revendication précédente, dans lequel l'inhibiteur comprend :
du sulfate de baryum ou du sulfate de calcium ; et
Pr(OH)₃.

8. Composant selon une quelconque revendication précédente, dans lequel la couche barrière (40) est appliquée directement sur la surface d'objet (34).

9. Composant selon une quelconque revendication précédente, dans lequel la couche d'écoulement laminaire (42) est appliquée directement sur la couche barrière (40).

10. Composant selon l'une quelconque des revendications 1 à 8, dans lequel le revêtement multicouche (32) comprend en outre une couche primaire (44) entre la couche barrière (40) et la couche d'écoulement laminaire (42).

11. Composant selon la revendication 10, dans lequel la couche primaire (44) comprend l'un parmi un alcoxysilane fonctionnalisé comportant un motif hydrolysable, le (3-glycidoxypropyl)triméthoxysilane et un aminoéthylaminopropyltriméthoxysilane.
